# EUROPEAN PATENT SPECIFICATION

(11) **EP 4 595 150 B1**
(45) Date of publication and mention of the grant of the patent: **09.12.2026**
(21) Application number: 23808658.1
(22) Date of filing: 26.09.2023
(51) Int. Cl.: H01M 10/613, H01M 10/617, H01M 10/6556, H01M 10/6557, H01M 10/6567

(54) **HEAT EXCHANGER WITH REGULATION OF THE CURRENT OF THE HEAT TRANSFER MEDIUM**
WÄRMETAUSCHER MIT REGELUNG DES WÄRMETRÄGERSTROMES
ÉCHANGEUR DE CHALEUR À RÉGULATION DU COURANT DE L'AGENT CALOPORTEUR

(30) Priority: 29.09.2022 CZ 20220412
(43) Date of publication of application: 06.08.2025
(73) Proprietor: N-Solutions s.r.o., 68601 Stare Mesto (CZ)
(72) Inventor: NOVÁCEK, Tomás, 68601 Uherské Hradiste (CZ)
(74) Representative: Dadej, Leopold
(86) International application number: PCT/CZ2023/050060
(87) International publication number: WO 2024/067893

(56) References cited:
- CN-A- 107 946 696
- US-A1- 2008 057 382
- US-A1- 2019 077 275

## Description

### Technical Field

The invention relates to heat exchangers with regulation of the current of a heat transfer medium into different paths of the flow of the heat transfer medium, through which the heat transfer medium is brought into contact with heat transfer surfaces of a thermally regulated component.

### Background of the Invention

At present, the flow of a heat transfer medium driven by a heat exchanger around a thermally regulated component is often not regulated in any way, wherein all heat transfer surfaces thereof are thermally regulated in a constant manner, and the heat exchanger thus cannot react to temperature fluctuations at different locations of the thermally regulated component.

One solution that provides partial regulation of the current of the heat transfer medium is disclosed in the document US20080057382 A. This solution provides cooling of battery cells between which the heat transfer medium flows, wherein the medium is directed by a valve downstream of an inlet port. This valve oscillates sideways, thereby directing the current of the medium in different directions between the different battery cells. This solution achieves more efficient cooling by means of an oscillating flap but does not solve the problem of directing the current in a directed manner to a specific space of the thermally regulated component.

The solution of the document US7172831 B2 optimises the uniformity of battery cell cooling by reversing the direction of the current of the heat transfer medium by switching a pair of valves simultaneously between two positions corresponding to different current directions. Again, this solution optimises the uniformity of cooling by the heat transfer medium, but such a system is not able to target the current to a certain part of the set of battery cells that has a higher temperature at a given time and requires more efficient cooling.

Other known heat exchangers are disclosed in documents US2019077275 A1, CN107946696 A and US 2008057382 A1. The major disadvantage of these exchangers is that they do not allow to effectively adjust the distribution of the heat transfer medium within the heat exchanger and divide or promote the flow of the heat transfer medium into desired parts thereof.

For the above reasons, it is desirable to develop a heat exchanger solution that is capable of actively reacting to temperature fluctuations in different regions of the thermally regulated component by directing the current of the heat transfer medium, and which at the same time would not require changes in the flow rate or temperature of the inlet heat transfer medium.

### Summary of the Invention

The above shortcomings are eliminated by a heat exchanger with regulation of the current of a heat transfer medium comprising an inlet port for the heat transfer medium, an outlet port for the heat transfer medium, a thermally regulated component comprising heat transfer surfaces, a first path of the flow and a second path of the flow of the heat transfer medium in heat transfer contact with different heat transfer surfaces of the thermally regulated component, and an inlet manifold comprising an inlet integrated channel connected to the inlet port, wherein the first path of the flow and the second path of the flow are connected by their first end to the inlet integrated channel and are connected by their second end to the outlet port. The inlet integrated channel comprises a first inlet channel and a second inlet channel, wherein the first inlet channel connects the inlet port to the mouth of the first path from the inlet integrated channel and the second inlet channel connects the inlet port to the mouth of the second path from the inlet integrated channel, wherein furthermore the inlet manifold in the first inlet channel comprises a first valve for the regulation of the flow of the heat transfer medium through the first inlet channel.

The advantage of the heat exchanger with regulation of the current of the heat transfer medium of the invention is the possibility to actively and simply regulate the flow of the heat transfer medium flowing from the inlet manifold to different regions of the thermally regulated component, where the heat transfer medium comes into contact with different heat transfer surfaces of the thermally regulated component. Such a heat exchanger allows the flow of the medium to be directed to locations where a higher cooling rate is needed at a given time, while simultaneously reducing the flow at locations where such a rate of cooling is not needed at the same time. This results in more stable temperature uniformity in all regions of the thermally regulated component by compensating for different temperature fluctuations in different regions of the thermally regulated component. Moreover, such temperature fluctuations can be predicted by calculation and the cooling intensity can be increased before a more rapid temperature rise in the given region of the thermally regulated component. Through continuous changes in the flow of the heat transfer medium through the various paths over time, some embodiments of the heat exchangers may result in greater agitation of the heat transfer medium throughout the entire volume within the heat exchanger, resulting in a more uniform heat transfer medium temperature and thus more uniform cooling in general. This makes it easier for the heat transfer medium to reach the edges and various folds in the space around the thermally regulated component.

The solution of the heat exchanger of the invention further allows for various alternative arrangements of the thermally regulated component, where different regions thereof need to be cooled at different intensities. For example, if the thermally regulated component is a battery cell assembly, the assembly may comprise two types of battery cells, where one type is more demanding in terms of cooling. The valve may then basically be configured to provide a higher rate of flow to the region of the battery cells that are more demanding in terms of cooling, wherein it provides a higher rate of flow to the region of battery cells that are less demanding in terms of cooling only when needed, or only at short intervals.

The inlet manifold further comprises a second valve in the second inlet channel for the regulation of the flow of the heat transfer medium through the second inlet channel. The embodiments with multiple valves allow to draw the advantages of the invention even in more complex solutions for controlling the flow of the heat transfer medium around a thermally regulated component and in more complex solutions of heat exchangers where there are a greater number of flow paths and/or where more precise regulation of the flow, or more precise control of the flow in the paths of the heat transfer medium downstream of individual valves, is required.

Preferably, the heat exchanger of the invention further comprises an outlet manifold comprising an outlet integrated channel connected to the outlet port, wherein the first and second paths of the flow are connected to the outlet port via the outlet integrated channel of the outlet manifold and exit into the outlet integrated channel at different locations. Preferably, the outlet manifold comprises a third valve in the outlet integrated channel for the regulation of the flow of the heat transfer medium. Preferably, the outlet integrated channel comprises a first outlet channel and a second outlet channel, wherein the first outlet channel connects the outlet port with the mouth of the first path to the outlet integrated channel and the second outlet channel connects the outlet port with the mouth of the second path to the outlet integrated channel, wherein a third valve is located in the first outlet channel, wherein the outlet manifold further comprises in the second outlet channel a fourth valve for the regulation of the flow of the heat transfer medium. The regulation of the flow also at the outlet of the heat exchanger provides additional possibilities to further control the flow of the heat transfer medium. It is thus possible, for example, to ensure multiple variations of the flow around the thermally regulated component thanks to the cooperation of the valve at the inlet and the valve at the outlet, or only by the operation of the first valve at the inlet in combination with a specific mouth of the paths to the outlet integrated channel.

The temperature regulated component is a set of at least three battery cells that are arranged at a distance from each other such as to form a space between them for the flow of the heat transfer medium, wherein the paths of the flow of the heat transfer medium pass through this space and the heat transfer surfaces are the walls of the battery cells. The paths of the flow of the heat transfer medium are formed directly by the heat transfer surfaces of the battery cells. The paths of the flow of the heat transfer medium are not defined by the pipes through which it would flow, thus material is being saved. Thus, the paths of the flow are not clearly defined and the specific path of the through-flow of the medium is determined by which mouth of the path from the inlet integrated channel the medium flows and in what quantity and rate, or how the outflow of the medium is controlled.

Preferably at least one valve comprises an electronic drive and that it further comprises a control unit communicatively connected to the electronic drive of the valve and at least two temperature determining sensors communicatively connected to the control unit, wherein the temperature determining sensors are located at at least two different locations of the thermally regulated component. In these embodiments, the flow can be actively controlled based on simultaneously acquired information about the temperature in different regions of the thermally regulated component.

Preferably, the temperature regulated component is a set of at least three battery cells, wherein each battery cell comprises a temperature determining sensor connected to a contact of a battery cell for connection to an electrical circuit. This is a preferable solution for obtaining information about the temperature of the individual battery cells. The temperature sensor does not need to be directly on the paths for the flow of the heat transfer medium, but the temperature can be calculated from physical quantities measured at the contact of the battery cell for connection to the electronic circuit.

Preferably at least the valve comprises a controllable shape element for directing the current of the heat transfer medium in a particular direction. In addition to the through-flow rate, the valve can also regulate the direction of the flow of the medium.

The method of operation of the heat exchanger with regulation of the current of the heat transfer medium will be described below. The method comprises the step of detecting the temperature of the thermally regulated component at at least two different locations using temperature determining sensors, and then the step of controlling the flow of the heat transfer medium through a first path of the flow and a second path of the flow of the heat transfer medium in heat transfer contact with different heat transfer surfaces of the thermally regulated component based on the step of detecting the temperature. In the step of controlling the flow, the first valve controls the flow of the heat transfer medium through the first inlet channel connecting the inlet port and the mouth of the first path from the inlet integrated channel. The second valve controls the flow of the heat transfer medium through the second inlet channel connecting the inlet port and the mouth of the second path from the inlet integrated channel, wherein a specific through-flow path of the heat transfer medium is determined by which mouth of the path from the inlet integrated channel the heat transfer medium flows through, and in what quantity and rate.

Preferably, further in the step of controlling the flow, the outflow of the heat transfer medium from the first and second paths to the outlet manifold is controlled by a third valve, wherein the third valve controls the flow of the heat transfer medium from the mouth of the first path through the first outlet channel to the outlet port.

Preferably, in the step of detecting the temperature, the temperature is determined from the contacts of the battery cells for connection to the electrical circuit.

Preferably, in the step of controlling the flow, the flow of the heat transfer medium is controlled by the rate of opening of the first valve and the rotation of the controllable shape element for directing the current of the heat transfer medium of the first valve.

Here, some features of the solution will be clarified by which it is defined.

The heat transfer medium may be liquid, for example water or liquids based on glycol, ethyl alcohol or potassium salt of formic acid, or gaseous, e.g., air.

A thermally regulated component means an object of temperature regulation, i.e., for example, an assembly of battery cells, accumulators, or other waste heat producing devices. The heat transfer surface of the thermally regulated component then means any surface on the thermally regulated component capable of exchanging heat with the external environment. Preferably, the heat transfer surface is part of a piece of a thermally regulated component that is made of a material with high thermal conductivity, for example metal. Ideally, when such a piece is designed to remove as much heat as possible from the thermally regulated component, which is then transferred away from the assembly through the heat transfer medium via the heat transfer surface. The heat transfer surface is in direct contact with the heat transfer medium. By claiming that the first path of the flow and the second path of the flow of the heat transfer medium are in heat transfer contact with different heat transfer surfaces of the thermally regulated component, it is meant that the paths of the flow of the heat transfer medium, or the heat transfer medium, are in heat transfer contact with the thermally regulated component at different locations directly through the heat transfer surfaces. By heat transfer contact between the path of the heat transfer medium and the heat transfer surface is meant a contact capable of heat exchange, in particular a direct contact of the medium with the heat transfer surface.

The path of the flow of the heat transfer medium means the space where the trajectory of the heat transfer medium leads in the part of the heat exchanger providing the heat transfer between the thermally regulated component and the heat transfer medium, i. e. it can be understood as the path of the heat transfer medium between the inlet integrated channel and the outlet port or the outlet integrated channel. The path of the flow of the heat transfer medium is defined directly by the structure of the space itself for the flow of the heat transfer medium in the part of the heat exchanger providing heat transfer between the thermally regulated component and the heat transfer medium, thus the individual paths of the flow of the heat transfer medium can be defined directly by the heat transfer surfaces and the external structure of the heat exchanger. The individual paths of the flow of the heat transfer medium may intermingle and share parts of the trajectories. In embodiments where the individual paths of the flow are not defined by pipes, and thus are not clearly defined, the particular path of the flow of the medium is determined by which mouth of the path from the inlet integrated channel the medium flows and in what quantity and rate, and in some embodiments also by how the outflow of the medium is controlled.

The first inlet channel means the part of the inlet integrated channel connecting the inlet port and the mouth of the first path allowing the flow of the medium from the inlet port to the first path of the flow. The second inlet channel means the part of the inlet integrated channel connecting the inlet port and the mouth of the second path allowing the flow of the medium from the inlet port to the second path of the flow.

Manifold means a component dividing the flow of the heat transfer medium from the port into at least two different paths of the flow of the heat transfer medium, thus it can be understood as a divider of the flow.

When the mutual connection of channels, ports, paths of the flow is described, it is meant to be a connection allowing the flow of the heat transfer medium between these elements to define the flow of the heat transfer medium.

The electronic drive of the valve means an electronically controlled engine controlling the rate of opening or closing of the valve. The electronic drive of the valve can also provide the angle of rotation of the controllable shape element of the valve.

The temperature determining sensor means an element capable of measuring any physical parameter from which the temperature of a thermally regulated component at a given location can be calculated, or at least approximately determined. The temperature determining sensor can be, for example, a resistance thermometer, a thermocouple, a liquid crystal thermal sensor or a sensor for the volumetric expansion of liquids or the longitudinal expansion of solids (metals) at different temperatures.

The controllable shape element means a shaped part of the valve serving as a fin for directing the current, it can be a separately controllable element of the valve or it can be, for example, a direct part of the valve, where it is part of a piece that directly provides the closing of the through-flow of the medium through the valve.

### Clarification of the Drawings

A summary of the invention is further clarified by exemplary embodiments thereof, which are described using the accompanying drawings, in which:
Fig. 1 illustrates a heat exchanger with regulation of the current of a heat transfer medium of a first exemplary embodiment of the invention,
Fig. 2 illustrates a detail of an inlet manifold of the heat exchanger with regulation of the current of the heat transfer medium of the first exemplary embodiment of the invention,
Fig. 3 illustrates the heat exchanger with regulation of the current of the heat transfer medium of a second exemplary embodiment of the invention,
Fig. 4 illustrates the heat exchanger with regulation of the current of the heat transfer medium of a third exemplary embodiment of the invention,
Fig. 5 illustrates the heat exchanger with regulation of the current of the heat transfer medium of a fourth exemplary embodiment of the invention,
Fig. 6 illustrates the heat exchanger with regulation of the current of the heat transfer medium of a fifth exemplary embodiment of the invention,
Fig. 7 illustrates the heat exchanger with regulation of the current of the heat transfer medium of a sixth exemplary embodiment of the invention,
Fig. 8 illustrates a diagram of the connection of temperature determining sensors, control unit, and electronic drives of valves in the embodiment of the heat exchanger with regulation of the current of the heat transfer medium of the sixth exemplary embodiment of the invention.

### Exemplary Embodiments of the Invention

The heat exchanger with regulation of the current of the heat transfer medium of the invention will be further clarified by exemplary embodiments using the respective drawings.

The heat exchanger of the invention comprises an inlet manifold 6, to which an inlet port 1 is connected, through which the heat transfer medium flows into the system. The inlet manifold 6 divides the flow into a set of at least two paths 5 of the flow of the heat transfer medium, wherein it comprises an inlet integrated channel 7 comprising several mouths 10, or openings, through which the heat transfer medium flows from the inlet manifold 6 into the paths 5 of the flow. The paths 5 of the flow then pass around the thermally regulated component 3, specifically around its heat transfer surfaces 4, with which the heat transfer medium is thus brought into heat transfer contact. The inlet integrated channel 7 distributes the heat transfer medium to the mouth 10 of the paths of the flow, wherein it comprises a first inlet channel 8 connecting the inlet port 1 to the mouth 10 of the first path from the inlet integrated channel 7 and a second inlet channel 9 connecting the inlet port 1 to the mouth 10 of the second path from the inlet integrated channel 7, wherein the first inlet channel 8 and the second inlet channel 9 are arranged in parallel. Thus, the first inlet channel 8 and the second inlet channel 9 do not overlap or cross but need not be separately connected to the inlet port 1. The inlet integrated channel 7 may comprise a prechamber downstream of the inlet port 1 to which the first and second inlet channels 8,9 are connected. Then, in the first inlet channel 8, the inlet manifold 6 comprises at least one valve 11 which controls the flow to the mouth 10 of the first path, or other mouths 10 of the paths located downstream of the valve 11.

The first exemplary embodiment does not fall within the scope of claim 1 because it involves an indirect contact of the heat transfer medium with the battery cells through pipes.

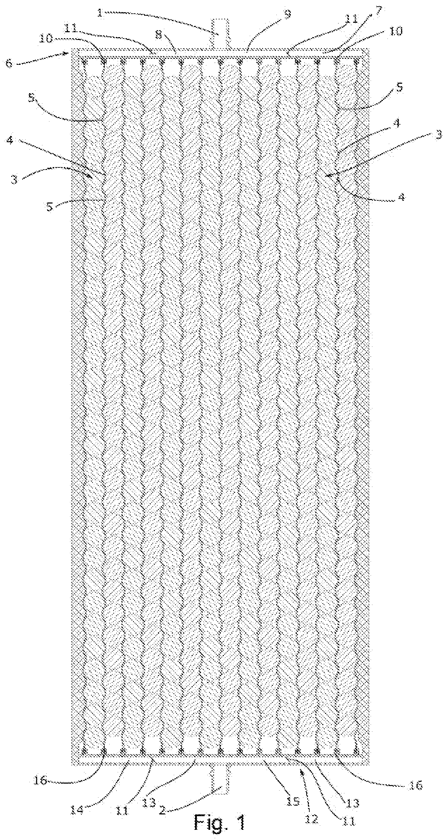

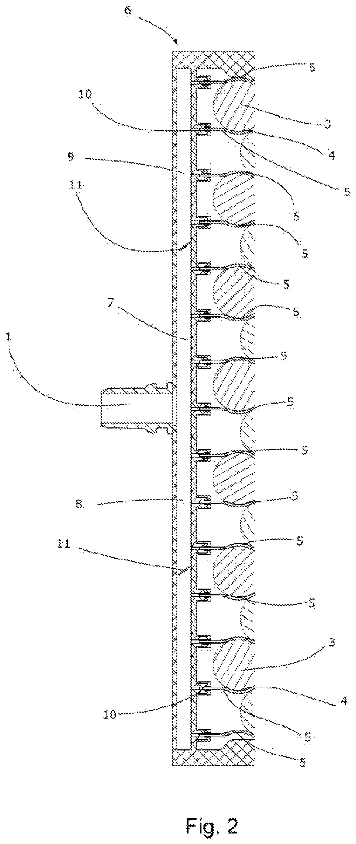

The first exemplary embodiment of the basic parts of the invention and its arrangement is illustrated in Fig. 1 and Fig. 2. The heat exchanger of the first exemplary embodiment comprises a first valve 11 in the first inlet channel 8 and a second valve 11 in the second outlet channel 9. The inlet integrated channel 7 comprises fifteen mouths 10 of the path of the flow of the heat transfer medium to the part of the heat exchanger providing heat transfer between the thermally regulated component 3 and the heat transfer medium. The first inlet channel 8 comprises eight mouths 10 of the path from the inlet integrated channel 7, and the second inlet channel 9 also comprises eight mouths 10 of the path from the inlet integrated channel 7. One mouth 10 of the path from the inlet integrated channel 7 is located immediately opposite the inlet port 1, wherein the space between the inlet port 1 and this valve 11 can be considered as an inlet prechamber to which the first and second inlet channels 8,9 are connected. Inlet chamber means a space forming a junction in the inlet integrated channel 7 downstream of the inlet port 1 where the flow is divided into individual channels (e.g., the first and second inlet channels 8,9). Exactly 4 mouths 10 of the path are located downstream of the first valve 11 in the first inlet channel 8 and 4 mouths 10 of the path are located downstream of the second valve 11 in the second inlet channel 9 in view of the direction of the flow of the heat transfer medium. A detail of the inlet manifold 6 is illustrated in Fig. 2.

In the first exemplary embodiment, the heat exchanger comprises pipes, particularly 15 pipes, each connecting separately one mouth 10 of the path from the inlet integrated channel 7 to a separate mouth 16 of the path to the outlet integrated channel 13. Thus, each path 5 of the flow of the heat transfer medium is defined by a given pipe through which the heat transfer medium is guided by a part of the heat exchanger providing heat transfer between the thermally regulated component 3 and the heat transfer medium. In the first exemplary embodiment of the heat exchanger of the invention, the thermally regulated component 3 is a set of battery cells spaced at a uniform distance from each other so as to form a space between them for the pipes with the heat transfer medium, which are closely adjacent to the walls of the battery cells, which in this embodiment are the heat transfer surfaces 4. Thus, the paths 5 of the flow of the heat transfer medium lead between the battery cells and, by exchanging heat with the heat transfer surfaces 4 of the battery cells through the walls of the pipes, they provide waste heat removal through the heat transfer medium.

The heat exchanger of the first exemplary embodiment comprises an outlet manifold 12 comprising an outlet integrated channel 13 connected to the outlet port 2. The outlet integrated channel 13 comprises fifteen mouths 16 of the path to the outlet integrated channel 13. The first outlet channel 14 comprises eight mouths 16 of the path to the outlet integrated channel 13, and the second outlet channel 15 also comprises eight mouths 16 of the path to the outlet integrated channel 13. One mouth 16 of the path to the outlet integrated channel 13 is located immediately opposite the outlet port 2, wherein it is located in the outlet chamber to which the first and second outlet channels 14,15 are connected. The outlet chamber means the space of the outlet integrated channel 13 forming a junction upstream of the outlet port, in which the flow joins and flows out through the outlet port 2. Exactly 4 mouths 16 of the path are located upstream of the third valve 11 in the first outlet channel 14 and 4 mouths 16 of the path are located upstream of the fourth valve 11 in the second outlet channel 15 in view of the flow of the heat transfer medium. Thus, it can be argued that in the first exemplary embodiment, the embodiments of the inlet manifold 6 and the outlet manifold 12 are identical.

In the first exemplary embodiment, all 4 valves 11 are provided with an electric drive 17 of the valve which is connected to the control unit 18. The temperature determining sensors 19 are located at the contacts of the individual battery cells, wherein they detect physical values from the contact of the battery cell, based on which the temperature of the battery cell, i.e., the region of the thermally regulated component 3, is subsequently determined. All of the temperature determining sensors 19 are preferably connected to the control unit 18.

The valves 11 further comprise a controllable shape element 20 for directing the current of the heat transfer medium in a particular direction, which is spherical, wherein it has the shape of a flat disc, and corresponds in cross-section to the spherical cross-section of the particular channel in which the valve 11 is located. This controllable shape element 20 is rotatably mounted about an axis perpendicular to the longitudinal axis of the channel and by its rotation regulates the rate of opening of the valve 11, or the channel, wherein it completely closes the channel when its surface is oriented completely perpendicular to the longitudinal axis of the channel. If the surface of the controllable shape element 20 is oriented parallel to the direction of the through-flow of the medium, or to the longitudinal axis of the channel, the through-flow through the valve is completely open, by partially rotating the controllable shape element 20 to the left or right relative to the completely open position, the direction of the flow of the heat transfer medium downstream of the valve 11 can be regulated, since the flow of the medium will prefer a direction parallel to the controllable shape element 20 of the valve 11.

The function of the heat exchanger with regulation of the current of the heat transfer medium of the first exemplary embodiment of the invention will be explained herein. The control unit 18 continuously collects data regarding the temperature of the individual battery cells from the temperature determining sensors 19. The valves 11 are all fully open in the basic state. In general, the control unit 18 controls the valves 11 to provide a greater cooling intensity by the heat transfer medium in regions where a temperature rise of the battery cells above a specified tolerance limit is detected. As soon as the temperature in this region is reduced and stabilised at the target values, the valves 11 return to their default state. Preferably, the default state is such an arrangement of the valves 11 that results in the most uniform cooling intensity in all regions of the thermally regulated component 3.

Thus, for example, if a temperature rise is detected in the region of the middle battery cells, both valves 11 in the inlet manifold 6 are at least partially closed, thereby increasing the flow through the mouths 10 of the paths in the middle part of the inlet integrated channel 7, i.e., those to which the flow is not controlled by the valve 11 from the inlet port 1. In the case of the outlet manifold 12, the valves 11 can cooperate and also close the outflow from the side paths 5 of the flow, thereby helping the outflow from the middle paths 5 of the flow, wherein unnecessary stresses that can lead to a malfunction are not created in the system. Therefore by, for example, closing the valve 11 in the first inlet channel 8, the through-flow through the second inlet channel 9 and the mouths 10 of the paths in the middle part of the inlet manifold 6 is increased.

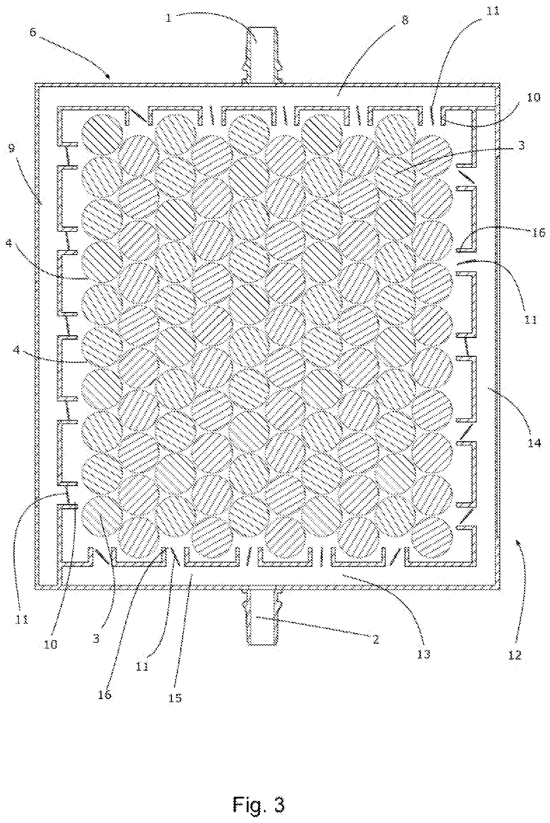

The second exemplary embodiment of the heat exchanger with regulation of the current of the heat transfer medium of the invention is illustrated in Fig. 3. In this embodiment, the thermally regulated component 3 is a set of battery cells spaced at a uniform distance from each other so as to form a space between each other for the flow of the heat transfer medium. Here, the heat transfer medium comes into direct contact with the heat transfer surfaces 4, wherein the paths 5 of the flow are not clearly defined by the pipes. The paths 5 of the flow of the heat transfer medium are defined by the battery cells and the internal walls of the heat exchanger, including the walls of the manifolds 6,12. The particular paths 5 of the flow of the heat transfer medium in this embodiment are determined by the current state of the valves 11 of the inlet manifold 6 and the valves 11 of the outlet manifold 12, wherein a change in the rate of opening of the individual valves 11 will result in an overall change in the flow in the space between the battery cells, where certain paths 5 of the flow may be preferred and, for example, in certain regions of the thermally regulated component 3 between the battery cells, the medium may not flow at all. The number of different paths 5 of the flow through which the heat transfer medium can flow from the inlet manifold 6 to the outlet manifold 12 is very large. The paths 5 of the flow may cross and overlap in various ways, wherein the medium flowing out of one mouth 10 of the path from the inlet integrated channel 7 may terminate at different mouths 16 of the path to the outlet integrated channel 13 based on the rate of opening of the respective valve 11 that controls the flow to that mouth 10 of the path and the overall flow of the medium through the part of the heat exchanger for heat exchange between the heat transfer medium and the thermally regulated component 3. As can be seen in Fig. 3 when viewed from above, the battery cells are arranged in an imaginary square, wherein along two adjoining sides the inlet manifold 6 is located and along the other two sides the outlet manifold 12 is located.

In the second exemplary embodiment, the inlet manifold 6 comprises ten mouths 10 of the path from the inlet integrated channel 7 leading to the space between the battery cells arranged in an L-shape. Analogically to this inlet manifold 6, the outlet manifold 12 is also implemented. All the valves 11 are located just upstream of the mouths 10 of the path from the inlet integrated channel 7 and downstream of the mouths 16 of the path to the outlet integrated channel 13 in terms of the flow of the heat transfer medium. Thus, each valve 11 independently controls the flow of the medium through the given opening (mouth) in the inlet manifold 6 or outlet manifold 12. The second exemplary embodiment comprises control using temperature determining sensors 19, a control unit 18, and electronic drives 17 of the valve identical to the first exemplary embodiment.

The function of the heat exchanger with regulation of the current of the heat transfer medium of the second exemplary embodiment of the invention will be explained herein. In essence, the function is similar to the first exemplary embodiment, but the method of operation is more complex due to a higher number of valves 11 and paths 5 of the flow of the heat transfer medium. Some basic principles of operation will be presented below, which can then be combined in various ways into more complex algorithms of operation of the heat exchanger of the invention. In the default state, all valves 11 are open, thus cooling all the battery cells uniformly. If a temperature rise is detected in a region of the thermally regulated component 3, all the valves 5 are at least partially closed except those that provide flow through exactly that region of the thermally regulated component 3 with the temperature rise. For example, only the valves 11 in one mouth 10 of the path from the inlet integrated channel 7 and one mouth 16 of the path to the outlet integrated channel 13 are left open, which have exactly this region between them. The flow of the medium will be maximised exactly between these mouths 11 of the path, thus providing more cooling intensity in the critical region. For example, in the case of a larger region of the temperature rise, the valves 11 in two adjoining mouths 10 of the path from the inlet integrated channel 7 and two adjoining mouths 16 of the path to the outlet integrated channel 13 that have exactly this region between them will be open. Thus, by opening the various valves 11 of the inlet manifold and the valves 11 of the outlet manifold, the preferred paths 5 of the flow of the heat transfer medium can be formed at the current time such that regions of the temperature rise are cooled with a greater intensity.

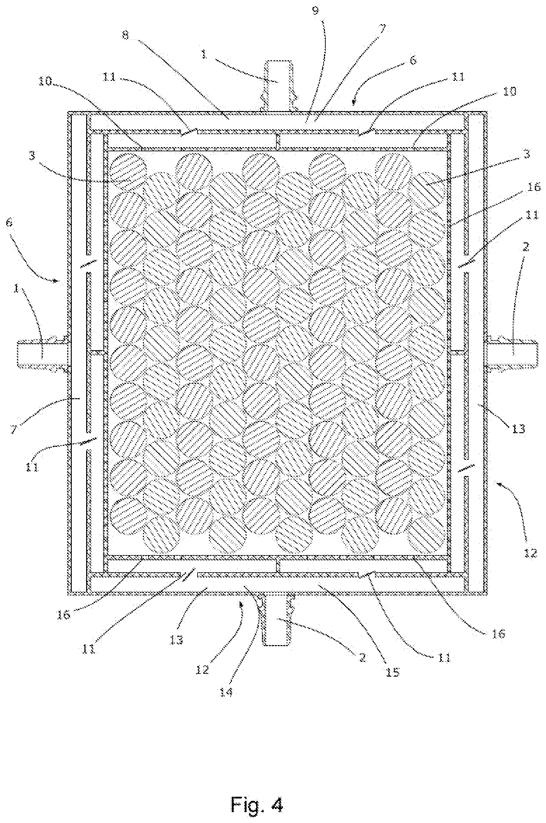

The third exemplary embodiment of the heat exchanger with regulation of the current of the heat transfer medium of the invention is illustrated in Fig. 4. This embodiment is similar to the second exemplary embodiment of the invention, except that it comprises two separate inlet manifolds 6 and two separate outlet manifolds 12. Each manifold 6,12 comprises two valves 11 and an integrated channel 7,13 comprising two dividing chambers. For the inlet manifolds 6, a first inlet channel 8 leads to the mouth of the first dividing chamber in which the first valve 11 is located that controls the flow of the heat transfer medium into the first dividing chamber, and a second inlet channel 9 leads to the mouth of the second dividing chamber in which the second valve 11 is located that controls the flow of the heat transfer medium into the second dividing chamber. The dividing chamber of the inlet manifolds 6 comprises several, for example 4 to 5, mouths 10 of the path from the inlet integrated channel 7. The valves 11 therefore control the flow to the dividing chambers, where the flow is uniformly divided between the mouths 10. Outlet manifolds 12 are implemented in the same way. From the space between the battery cells, the heat transfer medium flows through the mouth 16 of the path into the dividing chamber, from there the outflow to the outlet port 2 is controlled by the valve 11 located in the mouth from this outlet dividing chamber. The third exemplary embodiment comprises control using the temperature determining sensors 19, control unit 18, and electronic drives 17 of the valve identical to the first exemplary embodiment.

The function of the third exemplary embodiment of the invention is very similar to the function of the second exemplary embodiment. Due to the smaller number of valves 11, this embodiment has only a smaller resolution. The preferred flows of the heat transfer medium can only be created in smaller numbers here, wherein specific regions of the thermally regulated component 3 cannot be targeted as precisely.

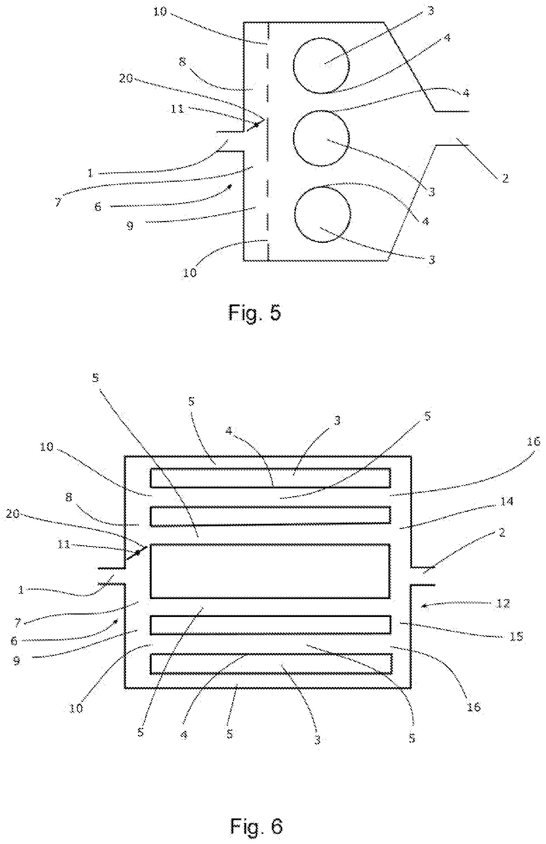

In Fig. 5, a diagram of an embodiment of the invention of the fourth exemplary embodiment which has only one valve 11 in the inlet manifold 6 is illustrated. The inlet integrated channel 7 comprises six mouths 10 of the path, which three mouths of the path are from the first inlet channel 8 and three mouths are from the second inlet channel 9, wherein the valve 11 is located upstream of the three mouths 10 of the first inlet channel 8. In this embodiment, the thermally regulated component 8 is a set of battery cells, and the part of the heat exchanger providing heat transfer between the thermally regulated component 3 and the heat transfer medium is implemented similarly to the second and third exemplary embodiments of the invention. The paths 5 of the flow of the heat transfer medium lead from the mouth 10 of the paths from the inlet manifold 6 directly to the outlet port 2. The fourth exemplary embodiment comprises control using the temperature determining sensors 19, control unit 18, and electronic drives 17 of the valve identical to the first exemplary embodiment.

The function of the heat exchanger with regulation of the current of the heat transfer medium of the first exemplary embodiment of the invention will be explained herein. In the default state, the valve 11 is open, wherein from all the mouths 10 from the inlet integrated channel 7 the flow of the heat transfer medium is the same. When the first inlet channel 8 is at least partially closed by the valve 11, an increase in through-flow through the second inlet channel 9 and the mouths of the paths 10 thereof occurs. In further embodiments, the heat exchanger may be designed in the manner of this embodiment such that in the default state where the valve 11 is open, there is a higher through-flow through the first inlet channel 8 than through the second inlet channel 9. After the valve 11 is closed, a higher through-flow through the second inlet channel 9 than through the first inlet channel 8 occurs.

The fifth exemplary embodiment of the invention is illustrated in Fig. 6. In this embodiment, the inlet manifold 6 comprises only one valve 11. The inlet integrated channel 7 comprises six mouths 10 of the path, where three mouths 10 from the first inlet channel 8 and three mouths 10 from the second inlet channel 9, wherein the valve 11 is located upstream of the three mouths 10 of the first inlet channel 8. The heat transfer surfaces 4 of the thermally regulated component in this embodiment are arranged to directly define the paths 5 of the flow of the heat transfer medium, which are straight and directly connect the mouths 10 of the path from the inlet integrated channel 7 and the mouths 16 of the path to the outlet integrated channel 13. In this embodiment, the heat transfer medium is in direct contact with the heat transfer surfaces 4. The fifth exemplary embodiment comprises valves 11 with electronic drive 17 of the valves, which is controlled by the control unit 18. In this embodiment, the control unit 18 does not operate based on the current temperature information but has a pre-set cycle of control of the valve 11 to ensure the most uniform cooling of the thermally regulated component 3. In one phase of the cycle, the first inlet channel 8 is closed, thereby maximising the through-flow through the paths 5 exiting from the second inlet channel 9. In a following phase of the cycle, the first inlet channel 8 is open to allow access of the heat transfer medium even to the paths 5 exiting in the first inlet channel 8 and at the same time the through-flow through the paths 5 exiting from the second inlet channel 9 is reduced.

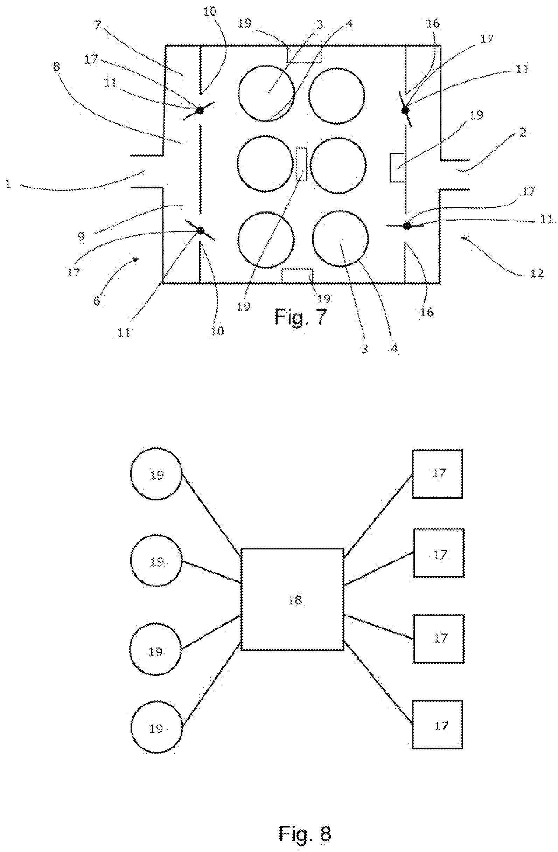

In Fig. 7, the sixth exemplary embodiment of the invention is illustrated. Where the inlet manifold 6 comprises, in the inlet integrated channel 7, two mouths 10 of the path and two valves 11, each located directly in one of the mouths 10 of the path, where they regulate the through-flow through the mouth 10 of the path. The outlet manifold 12 is also implemented analogically. The temperature determining sensors 19 are positioned directly in the space between the battery cells, where the paths 5 of the flow of the heat transfer medium lead. In Fig. 8, a diagram of the implementation of the connection of the temperature determining sensors 19, the electronic drives 17 of the valves, and the control unit 18 of the sixth exemplary embodiment is illustrated. According to the diagram of Fig. 8, the analogically connected control systems have even the heat exchangers of the first, second, third, fourth, and sixth embodiments of the invention, they differ only in the number of temperature determining sensors 19 and the electronic drives 17 of the valve. The function of the sixth exemplary embodiment of the invention is analogous to the function of the second exemplary embodiment.

### Industrial Applicability

The invention can also be used in other areas of industry outside of heat exchangers and temperature regulation issues, where active control of the flow of the medium through various paths using valves is required.

### List of Reference Numerals

- 1 -: Inlet port
- 2 -: Outlet port
- 3 -: Thermally regulated component
- 4 -: Heat transfer surface
- 5 -: Path of the flow of the heat transfer medium
- 6 -: Inlet manifold
- 7 -: Inlet integrated channel
- 8 -: First inlet channel
- 9 -: Second inlet channel
- 10 -: Mouth of the path from the inlet integrated channel
- 11 -: Valve
- 12 -: Outlet manifold
- 13 -: Outlet integrated channel
- 14 -: First outlet channel
- 15 -: Second outlet channel
- 16 -: Mouth of the path to the outlet integrated channel
- 17 -: Electronic drive of the valve
- 18 -: Control unit
- 19 -: Temperature determining sensor
- 20 -: Controllable shape element for directing the current of the heat transfer medium in a particular direction

## Claims

1. A heat exchanger with regulation of the current of the heat transfer medium comprising an inlet port (1) for the heat transfer medium, an outlet port (2) for the heat transfer medium, a thermally regulated component (3) comprising heat transfer surfaces (4), a first path (5) of a flow and a second path (5) of the flow of the heat transfer medium in heat transfer contact with the different heat transfer surfaces (4) of the thermally regulated component, and an inlet manifold (6) comprising an inlet integrated channel (7) connected to the inlet port (1), wherein the first path (5) of the flow and the second path (5) of the flow are connected by their first end to the inlet integrated channel (7) and by their second end to the outlet port (2), wherein the inlet integrated channel (7) comprises a first inlet channel (8) and a second inlet channel (9), wherein the first inlet channel (8) connects the inlet port (1) to a mouth (10) of the first path from the inlet integrated channel (7) and the second inlet channel (9) connects the inlet port (1) to the mouth (10) of the second path from the inlet integrated channel (7), wherein further, the inlet manifold (6) in the first inlet channel (8) comprises a first valve (11) for the regulation of the flow of the heat transfer medium through the first inlet channel (8) **characterised in that** the inlet manifold (6) further comprises a second valve (11) in the second inlet channel (9) for the regulation of the flow of the heat transfer medium through the second inlet channel (9), wherein the thermally regulated component (3) is a set of at least three battery cells that are arranged at a distance from each other such as to form a space between them for the flow of the heat transfer medium, wherein the paths (5) of the flow for the flowing of the heat transfer medium pass through this space and the heat transfer surfaces (4) are the walls of the battery cells, wherein the paths (5) of the flow of the heat transfer medium are formed directly by the heat transfer surfaces (4) of the battery cells, wherein a specific through-flow path (5) of the heat transfer medium is determined by which mouth (10) of the path (5) from the inlet integrated channel (7) the heat transfer medium flows through, and in what quantity and rate.

2. The heat exchanger with regulation of the current of the heat transfer medium of claim 1, **characterised in that** it further comprises an outlet manifold (12) comprising an outlet integrated channel (13) connected to the outlet port (2), wherein the first and second paths (5) of the flow are connected to the outlet port (2) via the outlet integrated channel (13) of the outlet manifold and the mouth (16) into the outlet integrated channel (13) at different locations.

3. The heat exchanger with regulation of the current of the heat transfer medium of claim 2, **characterised in that** the outlet manifold (12) comprises in the outlet integrated channel (13) a third valve (11) for the regulation of the flow of the heat transfer medium.

4. The heat exchanger with regulation of the current of the heat transfer medium of claim 3, **characterised in that** the outlet integrated channel (13) comprises a first outlet channel (14) and a second outlet channel (15) and a fourth valve (11) for the regulation of the flow of the heat transfer medium, wherein the first outlet channel (14) connects the outlet port (2) to the mouth (16) of the first path to the outlet integrated channel (13) and the second outlet channel (15) connects the outlet port (2) to the mouth (16) of the second path to the outlet integrated channel (13), wherein the outlet manifold (12) comprises the third valve (11) in the first outlet channel (14) and the fourth valve (11) in the second outlet channel (15).

5. The heat exchanger with regulation of the current of the heat transfer medium of any one of claims 1 to 4, **characterised in that** at least one valve (11) comprises a controllable shape element (20) for directing the current of the heat transfer medium in a particular direction.

6. The heat exchanger with regulation of the current of the heat transfer medium of any one of claims 1 to 5, **characterised in that** at least one valve (11) comprises an electronic drive (17) and that it further comprises a control unit (18) communicatively connected to the electronic drive (17) of the valve and at least two temperature determining sensors (19) communicatively connected to the control unit (18), wherein the temperature determining sensors (19) are located at at least two different locations of the thermally regulated component (3).

7. The heat exchanger with regulation of the current of the heat transfer medium of claim 6, **characterised in that** each battery cell comprises a temperature determining sensor (19) connected to a contact of a battery cell for connection to an electrical circuit.

8. A method of operation of the heat exchanger with regulation of the current of the heat transfer medium of any one of the preceding claims 6 to 7 comprising a step of detecting the temperature of the thermally regulated component (3) at at least two different locations using temperature determining sensors (19) and a subsequent step of controlling the flow of the heat transfer medium through the first path (5) of the flow and a second path (5) of the flow of the heat transfer medium in heat transfer contact with different heat transfer surfaces (4) of the thermally regulated component (3) based on the step of detecting the temperature, **characterised in that** in the step of controlling the flow, the first valve (11) controls the flow of the heat transfer medium through the first inlet channel (8) connecting the inlet port (1) and the mouth (10) of the first path from the inlet integrated channel (7) and the second valve (11) controls the flow of the heat transfer medium through the second inlet channel (9) connecting the inlet port (1) and the mouth (10) of the second path from the inlet integrated channel (7), wherein a specific through-flow path of the heat transfer medium is determined by which mouth (10) of the path from the inlet integrated channel (7) the heat transfer medium flows through, and in what quantity and rate.

9. The method of operation of the heat exchanger with regulation of the current of the heat transfer medium of claim 8, **characterised in that** further in the step of controlling the flow, the outflow of the heat transfer medium from the first and second paths (5) of the flow to the outlet manifold (12) is controlled by the third valve (11), wherein the third valve (11) controls the outflow of the heat transfer medium from the mouth (16) of the first path to the outlet integrated channel through the first outlet channel (14) to the outlet port (2).

10. The method of operation of the heat exchanger with regulation of the current of the heat transfer medium of any one of the preceding claims 8 to 9, **characterised in that** in the step of detecting the temperature, the temperature is determined from the contacts of the battery cells for connection to the electrical circuit.

11. The method of operation of the heat exchanger with regulation of the current of the heat transfer medium of any one of the preceding claims 8 to 10, **characterised in that** in the step of controlling the flow, the flow of the heat transfer medium is controlled by the rate of opening of the first valve (11) and the rotation of the controllable shape element (20) for directing the current of the heat transfer medium in a particular direction.

## Patentansprüche

1. Ein Wärmetauscher mit Regelung des Durchflusses des Wärmeübertragungsmediums, umfassend einen Einlassanschluss (1) für das Wärmeübertragungsmedium, einen Auslassanschluss (2) für das Wärmeübertragungsmedium, eine thermisch geregelte Komponente (3) mit Wärmeübertragungsflächen (4), einen ersten Strömungsweg (5) und einen zweiten Strömungsweg (5) des Wärmeübertragungsmedium, das in Wärmeübertragungskontakt mit den verschiedenen Wärmeübertragungsflächen (4) der thermisch geregelten Komponente stehen, sowie einen Einlassverteiler (6) mit einem integrierten Einlasskanal (7), der mit dem Einlassanschluss (1) verbunden ist, wobei der erste Strömungsweg (5) und der zweite Strömungsweg (5) mit ihrem ersten Ende an den integrierten Einlasskanal (7) und mit ihrem zweiten Ende an den Auslassanschluss (2) angeschlossen sind, wobei der integrierte Einlasskanal (7) einen ersten Einlasskanal (8) und einen zweiten Einlasskanal (9) umfasst, wobei der erste Einlasskanal (8) den Einlassanschluss (1) mit einer Mündung (10) des ersten Strömungswegs vom integrierten Einlasskanal (7) verbindet und der zweite Einlasskanal (9) den Einlassanschluss (1) mit der Mündung (10) des zweiten Strömungswegs vom integrierten Einlasskanal (7) verbindet, wobei ferner der Einlassverteiler (6) im ersten Einlasskanal (8) ein erstes Ventil (11) zur Regulierung des Durchflusses des Wärmeübertragungsmediums durch den ersten Einlasskanal (8) umfasst**, dadurch gekennzeichnet, dass** der Einlassverteiler (6) ferner ein zweites Ventil (11) im zweiten Einlasskanal (9) zur Regulierung des Durchflusses des Wärmeübertragungsmediums durch den zweiten Einlasskanal (9) umfasst, wobei die thermisch geregelte Komponente (3) eine Anordnung von mindestens drei Batteriezellen ist, die in einem solchen Abstand voneinander angeordnet sind, dass zwischen ihnen ein Raum für den Durchfluss des Wärmeübertragungsmediums entsteht, wobei die Strömungswege (5) für den Durchfluss des Wärmeübertragungsmediums durch diesen Raum verlaufen und die Wärmeübertragungsflächen (4) die Wände der Batteriezellen sind, wobei die Strömungswege (5) des Wärmeübertragungsmediums direkt durch die Wärmeübertragungsflächen (4) der Batteriezellen gebildet werden, wobei ein bestimmter Strömungsweg (5) des Wärmeübertragungsmediums dadurch festgelegt wird, durch welche Mündung (10) des Weges (5) aus dem integrierten Einlasskanal (7) das Wärmeübertragungsmedium strömt und in welcher Menge und mit welcher Durchflussrate.

2. Der Wärmetauscher mit Regelung des Durchflusses des Wärmeübertragungsmediums nach Anspruch 1, **dadurch gekennzeichnet, dass** er ferner einen Auslassverteiler (12) umfasst, der einen mit dem Auslassanschluss (2) verbundenen integrierten Auslasskanal (13) umfasst, wobei der erste und der zweite Strömungsweg (5) über den integrierten Auslasskanal (13) des Auslassverteilers und die Mündung (16) in den integrierten Auslasskanal (13) an unterschiedlichen Stellen mit dem Auslassanschluss (2) verbunden sind.

3. Der Wärmetauscher mit Regelung des Durchflusses des Wärmeübertragungsmediums nach Anspruch 2, **dadurch gekennzeichnet, dass** der Auslassverteiler (12) im integrierten Auslasskanal (13) ein drittes Ventil (11) zur Regelung des Durchflusses des Wärmeübertragungsmediums umfasst.

4. Der Wärmetauscher mit Regelung des Durchflusses des Wärmeübertragungsmediums nach Anspruch 3, **dadurch gekennzeichnet, dass** der integrierte Auslasskanal (13) einen ersten Auslasskanal (14) und einen zweiten Auslasskanal (15) sowie ein viertes Ventil (11) zur Regelung des Durchflusses des Wärmeübertragungsmediums umfasst, wobei der erste Auslasskanal (14) den Auslassanschluss (2) mit der Mündung (16) des ersten Weges zum integrierten Auslasskanal (13) verbindet und der zweite Auslasskanal (15) den Auslassanschluss (2) mit der Mündung (16) des zweiten Weges zum integrierten Auslasskanal (13) verbindet, wobei der Auslassverteiler (12) das dritte Ventil (11) im ersten Auslasskanal (14) und das vierte Ventil (11) im zweiten Auslasskanal (15) umfasst.

5. Der Wärmetauscher mit Regelung des Durchflusses des Wärmeübertragungsmediums nach einem der Ansprüche 1 bis 4, **dadurch gekennzeichnet, dass** mindestens ein Ventil (11) ein steuerbares Formelement (20) zur Lenkung des Durchflusses des Wärmeübertragungsmediums in eine bestimmte Richtung umfasst.

6. Der Wärmetauscher mit Regelung des Durchflusses des Wärmeübertragungsmediums nach einem der Ansprüche 1 bis 5, **dadurch gekennzeichnet, dass** mindestens ein Ventil (11) einen elektronischen Antrieb (17) umfasst und dass er ferner eine Steuereinheit (18), die mit dem elektronischen Antrieb (17) des Ventils kommunikationstechnisch verbunden ist, sowie mindestens zwei Temperaturerfassungssensoren (19) umfasst, die mit der Steuereinheit (18) kommunikationstechnisch verbunden sind, wobei sich die Temperaturerfassungssensoren (19) an mindestens zwei verschiedenen Stellen der thermisch geregelten Komponente (3) befinden.

7. Der Wärmetauscher mit Regelung des Durchflusses des Wärmeübertragungsmediums nach Anspruch 6, **dadurch gekennzeichnet, dass** jede Batteriezelle einen Temperaturerfassungssensor (19) umfasst, der mit einem Kontakt einer Batteriezelle zum Anschluss an einen Stromkreis verbunden ist.

8. Ein Verfahren zum Betrieb des Wärmetauschers mit Regelung des Durchflusses des Wärmeübertragungsmediums nach einem der vorstehenden Ansprüche 6 bis 7, umfassend einen Schritt zum Erfassen der Temperatur der thermisch geregelten Komponente (3) an mindestens zwei verschiedenen Stellen unter Verwendung von Temperaturerfassungssensoren (19) und einen anschließenden Schritt zum Steuern des Durchflusses des Wärmeübertragungsmediums durch den ersten Strömungsweg (5) und den zweiten Strömungsweg (5) des Wärmeübertragungsmediums in Wärmeübertragungskontakt mit verschiedenen Wärmeübertragungsflächen (4) der thermisch geregelten Komponente (3) auf der Grundlage des Schritts der Temperaturerfassung, **dadurch gekennzeichnet, dass** im Schritt der Strömungssteuerung das erste Ventil (11) den Durchfluss des Wärmeübertragungsmediums durch den ersten Einlasskanal (8) steuert, der den Einlassanschluss (1) und die Mündung (10) des ersten Weges vom integrierten Einlasskanal (7) verbindet, und das zweite Ventil (11) den Durchfluss des Wärmeübertragungsmediums durch den zweiten Einlasskanal (9) steuert, der den Einlassanschluss (1) und die Mündung (10) des zweiten Weges vom integrierten Einlasskanal (7) verbindet, wobei ein spezifischer Strömungsweg des Wärmeübertragungsmediums dadurch festgelegt wird, durch welche Mündung (10) des Weges vom integrierten Einlasskanal (7) das Wärmeübertragungsmedium strömt und in welcher Menge und mit welcher Durchflussrate.

9. Das Verfahren zum Betrieb des Wärmetauschers mit Regelung des Durchflusses des Wärmeübertragungsmediums nach Anspruch 8, **dadurch gekennzeichnet, dass** ferner im Schritt der Durchflusssteuerung der Abfluss des Wärmeübertragungsmediums aus dem ersten und dem zweiten Strömungsweg (5) zum Auslassverteiler (12) durch das dritte Ventil (11) gesteuert wird, wobei das dritte Ventil (11) den Abfluss des Wärmeübertragungsmediums von der Mündung (16) des ersten Wegs zum integrierten Auslasskanal durch den ersten Auslasskanal (14) zum Auslassanschluss (2) steuert.

10. Das Verfahren zum Betrieb des Wärmetauschers mit Regelung des Durchflusses des Wärmeübertragungsmediums nach einem der vorstehenden Ansprüche 8 bis 9, **dadurch gekennzeichnet, dass** im Schritt der Temperaturerfassung die Temperatur anhand der Kontakte der Batteriezellen zur Anbindung an den Stromkreis ermittelt wird.

11. Das Verfahren zum Betrieb des Wärmetauschers mit Regelung des Durchflusses des Wärmeübertragungsmediums nach einem der vorstehenden Ansprüche 8 bis 10, **gekennzeichnet dadurch, dass** im Schritt der Durchflusssteuerung der Durchfluss des Wärmeübertragungsmediums durch den Öffnungsgrad des ersten Ventils (11) und die Drehung des steuerbaren Formelements (20) gesteuert wird, um den Durchfluss des Wärmeübertragungsmediums in eine bestimmte Richtung zu lenken.

## Revendications

1. Un échangeur de chaleur avec régulation du débit du fluide caloporteur, comprenant un orifice d'entrée (1) pour le fluide caloporteur, un orifice de sortie (2) pour le fluide caloporteur, un composant à régulation thermique (3) comportant des surfaces d'échange thermique (4), un premier circuit (5) d'écoulement et un deuxième circuit (5) d'écoulement du fluide caloporteur en contact thermique avec les différentes surfaces d'échange thermique (4) du composant à régulation thermique, et un collecteur d'entrée (6) comprenant un canal d'entrée intégré (7) relié à l'orifice d'entrée (1), où le premier circuit (5) d'écoulement et le deuxième circuit (5) d'écoulement sont reliés par leur première extrémité au canal d'entrée intégré (7) et par leur deuxième extrémité à l'orifice de sortie (2), où le canal d'entrée intégré (7) comprend un premier canal d'entrée (8) et un deuxième canal d'entrée (9), où le premier canal d'entrée (8) relie l'orifice d'entrée (1) à une embouchure (10) du premier circuit partant du canal d'entrée intégré (7) et le deuxième canal d'entrée (9) relie l'orifice d'entrée (1) à l'embouchure (10) du deuxième circuit partant du canal d'entrée intégré (7), où, en outre, le collecteur d'entrée (6) dans le premier canal d'entrée (8) comprend une première vanne (11) destinée à réguler le débit du fluide caloporteur à travers le premier canal d'entrée (8)**, caractérisé en ce que** le collecteur d'entrée (6) comprend en outre une deuxième vanne (11) dans le deuxième canal d'entrée (9) destinée à réguler le débit du fluide caloporteur à travers le deuxième canal d'entrée (9), où le composant à régulation thermique (3) est un ensemble d'au moins trois cellules de batterie disposées à distance les unes des autres de manière à former entre elles un espace destiné à l'écoulement du fluide caloporteur, où les circuits d'écoulement (5) du fluide caloporteur traversent cet espace et les surfaces d'échange thermique (4) sont les parois des cellules de batterie, où les circuits (5) d'écoulement du fluide caloporteur sont formés directement par les surfaces d'échange thermique (4) des cellules de batterie, où un circuit d'écoulement spécifique (5) du fluide caloporteur est déterminé par l'embouchure (10) du circuit (5) à partir du canal d'entrée intégré (7) par laquelle le fluide caloporteur s'écoule, ainsi que par sa quantité et son débit.

2. L'échangeur de chaleur avec régulation du débit du fluide caloporteur selon la revendication 1, **caractérisé en ce qu'**il comprend en outre un collecteur de sortie (12) comprenant un canal de sortie intégré (13) relié à l'orifice de sortie (2), où les premier et deuxième circuits (5) d'écoulement sont reliés à l'orifice de sortie (2) par le canal de sortie intégré (13) du collecteur de sortie et l'embouchure (16) débouchant dans le canal de sortie intégré (13) à des emplacements différents.

3. L'échangeur de chaleur avec régulation du débit du fluide caloporteur selon la revendication 2, **caractérisé en ce que** le collecteur de sortie (12) comprend, dans le canal de sortie intégré (13), une troisième vanne (11) destinée à la régulation du débit du fluide caloporteur.

4. L'échangeur de chaleur avec régulation du débit du fluide caloporteur selon la revendication 3, **caractérisé en ce que** le canal de sortie intégré (13) comprend un premier canal de sortie (14) et un deuxième canal de sortie (15) ainsi qu'une quatrième vanne (11) destinée à réguler le débit du fluide caloporteur, où le premier canal de sortie (14) relie l'orifice de sortie (2) à l'embouchure (16) du premier circuit vers le canal de sortie intégré (13) et le deuxième canal de sortie (15) relie l'orifice de sortie (2) à l'embouchure (16) du deuxième circuit vers le canal de sortie intégré (13), où le collecteur de sortie (12) comprend la troisième vanne (11) dans le premier canal de sortie (14) et la quatrième vanne (11) dans le deuxième canal de sortie (15).

5. L'échangeur de chaleur avec régulation du débit du fluide caloporteur selon l'une quelconque des revendications 1 à 4, **caractérisé en ce qu'**au moins une vanne (11) comprend un élément de forme contrôlable (20) destiné à orienter le débit du fluide caloporteur dans une direction particulière.

6. L'échangeur de chaleur avec régulation du débit du fluide caloporteur selon l'une quelconque des revendications 1 à 5, **caractérisé en ce qu'**au moins une vanne (11) comprend un actionneur électronique (17) et **en ce qu'**il comprend en outre une unité de commande (18) reliée de manière communicative à l'actionneur électronique (17) de la vanne et au moins deux capteurs de mesure de température (19) reliés de manière communicative à l'unité de commande (18), où les capteurs de mesure de température (19) sont situés en au moins deux emplacements différents du composant à régulation thermique (3).

7. L'échangeur de chaleur avec régulation du débit du fluide caloporteur selon la revendication 6, **caractérisé en ce que** chaque cellule de batterie comprend un capteur de mesure de température (19) relié à un contact d'une cellule de batterie pour la connexion à un circuit électrique.

8. Un procédé de fonctionnement de l'échangeur de chaleur avec régulation du débit du fluide caloporteur selon l'une quelconque des revendications 6 à 7 précédentes, comprenant une étape de détection de la température du composant à régulation thermique (3) en au moins deux emplacements différents à l'aide de capteurs de mesure de température (19) et une étape suivante de régulation du débit du fluide caloporteur à travers le premier circuit (5) d'écoulement et un deuxième circuit (5) de l'écoulement du fluide caloporteur en contact d'échange thermique avec différentes surfaces d'échange thermique (4) du composant à régulation thermique (3) sur la base de l'étape de détection de la température, **caractérisé en ce que**, lors de l'étape de régulation du débit, la première vanne (11) régule le débit du fluide caloporteur à travers le premier canal d'entrée (8) reliant l'orifice d'entrée (1) et l'embouchure (10) du premier circuit partant du canal d'entrée intégré (7), et la deuxième vanne (11) régule le débit du fluide caloporteur à travers le deuxième canal d'entrée (9) reliant l'orifice d'entrée (1) et l'embouchure (10) du deuxième circuit partant du canal d'entrée intégré (7), où un circuit d'écoulement spécifique du fluide caloporteur est déterminé par l'embouchure (10) du circuit partant du canal d'entrée intégré (7) par laquelle le fluide caloporteur s'écoule, ainsi que par sa quantité et son débit.

9. Le procédé de fonctionnement de l'échangeur de chaleur avec régulation du débit du fluide caloporteur selon la revendication 8, **caractérisé en ce que,** en outre, lors de l'étape de régulation du débit, l'écoulement du fluide caloporteur depuis les premier et deuxième circuits (5) vers le collecteur de sortie (12) est régulé par la troisième vanne (11), où la troisième vanne (11) régule le débit sortant du fluide caloporteur depuis l'embouchure (16) du premier circuit vers le canal de sortie intégré, en passant par le premier canal de sortie (14), jusqu'à l'orifice de sortie (2).

10. Le procédé de fonctionnement de l'échangeur de chaleur avec régulation du débit du fluide caloporteur selon l'une quelconque des revendications 8 à 9 précédentes, **caractérisé en ce que**, lors de l'étape de détection de la température, la température est déterminée à partir des contacts des cellules de la batterie destinées à être connectées au circuit électrique.

11. Le procédé de fonctionnement de l'échangeur de chaleur avec régulation du débit du fluide caloporteur selon l'une quelconque des revendications 8 à 10 précédentes, **caractérisé en ce que,** lors de l'étape de régulation du débit, le débit du fluide caloporteur est régulé par le degré d'ouverture de la première vanne (11) et par la rotation de l'élément de forme contrôlable (20) afin d'orienter le débit du fluide caloporteur dans une direction particulière.
